## Europäisches Patentamt

## European Patent Office

## Office européen des brevets

(19)

(11) Veröffentlichungsnummer: **0 208 837**
**B1**

(12)

# EUROPÄISCHE PATENTSCHRIFT

(45) Veröffentlichungstag der Patentschrift:
**14.06.89**

(51) Int. Cl.⁴: **G21C 17/06**

(21) Anmeldenummer: **86103899.0**

(22) Anmeldetag: **21.03.86**

(54) Verfahren und Vorrichtung zum Prüfen von vertikal erstreckten Brennstäben wassergekühlter Kernreaktoren, die zu einem Brennstabbündel zusammengefasst sind.

(30) Priorität: **12.07.85 DE 3524909**

(43) Veröffentlichungstag der Anmeldung:
**21.01.87 Patentblatt 87/4**

(45) Bekanntmachung des Hinweises auf die Patenterteilung:
**14.06.89 Patentblatt 89/24**

(84) Benannte Vertragsstaaten:
**BE CH DE FR IT LI NL SE**

(56) Entgegenhaltungen:
**EP-A- 0 123 597**
**EP-A- 0 163 935**
**FR-A- 2 130 194**
**FR-A- 2 298 859**
**FR-A- 2 525 799**

(73) Patentinhaber: **ABB Reaktor GmbH, Dudenstrasse 44, D-6800 Mannheim 1(DE)**

(72) Erfinder: **Scharpenberg, Rainer, Dipl.-Ing., Im Krappenklingen 32, D-6948 Wald-Michelbach(DE)**

(74) Vertreter: **Rupprecht, Klaus, Dipl.-Ing. et al, c/o BBC Brown Boveri Aktiengesellschaft ZPT Postfach 100351 Kallstadter Strasse 1, D-6800 Mannheim 1(DE)**

## Beschreibung

Die Erfindung betrifft ein Verfahren zum Prüfen von vertikal erstreckten Brennstäben wassergekühlter Kernreaktoren, die zu einem Brennstabbündel zusammengefaßt sind, wobei eine die Prüfgeräte tragende Sonde in die Räume zwischen die Brennstäbe eingefahren wird, und wobei das als Brennelement bezeichnete Brennstabbündel von einem Hebezeug gehalten wird.

Ein derartiges Verfahren ist aus der DE-A 33 37 048 bekannt. Wie aus der Fig. 1 dieser DE-A zu ersehen ist, muß das Brennelement auch während der Prüfung mit den Sonden durch Hebezeugunterstützung gehalten werden. Dadurch ist das Hebezeug für andere Aufgaben im Kernkraftwerk nicht verfügbar.

Eine in der DE-A 25 58 631 beschriebene Einrichtung zur Besichtigung von Brennelementen kommt zwar während des Prüfvorganges ohne das Hebezeug der Kernkraftwerksanlage aus. Diese Einrichtung ist, da sie sowohl das Brennelement als auch den Manipulator für die Prüfgeräte zu tragen hat, stabil ausgebildet und weist daher ein relativ hohes Gewicht auf. Für eine solche Einrichtung sind deshalb spezielle Haltervorrichtungen im Brennelement-Lager becken erforderlich, die oftmals nich vorhanden bzw. nur unter großem Aufwand anzubringen sind. Wegen des hohen Gewichtes, das eine solche Einrichtung zusammen mit dem von ihr zu tragenen Brennelement aufweist erfordert der Einsatz der Einrichtung eine Genehmigung durch die technische Aufsichtsbehörde, da weder die Wände des Brennelement-Lagerbecken noch die Lagergestelloberfläche für solche Belastungen ausgelegt sind.

Es ist daher die Aufgabe der Erfindung ein Verfahren der eingangs genannten Art anzugeben, das während der Prüfung eines Brennelementes kein Hebezeug der Kernkraftwerksanlage benötigt, das Prüfen des Brennelementes in mehreren Ebenen ermöglicht und trotzdem das Brennelement-Lagerbecken bzw. das Gestell zur aufnahme von Brennelementen nicht unzulässig belastet.

Gelöst wird die Aufgabe erfindungsgemäß die Kombination der nachfolgend aufgeführten Verfahrensschritte:

a) Eine Haltevorrichtung für ein zu prüfendes Brennelement wird in zwei unbesetzte Gestellpositionen eines Gestells zur Aufnahme von Brennelementen eingesetzt, wobei zwischen den zwei unbesetzten Gestellpositionen eine dritte unbesetzte Gestellposition freigehalten wird.

b) Ein zu prüfendes Brennelement wird mit einem Hebezeug in die dritte Gestellposition eingesetzt und mit der Haltevorrichtung verriegelt.

c) Das Brennelement wird mit Hilfe der Haltevorrichtung in vertikaler Richtung nach oben gefahren, wobei die vertikale Fahrbewegung zum Einfahren der Prüfsonde in die Räume zwischen den Brennstäben unterbrochen wird.

d) Nach erfolgter Prüfung wird das Brennelement mittels der Haltevorrichtung vertikal nach unten verfahren, bis es in der dritten Gestellposition abgestellt ist.

e) Mit dem Hebezeug der Kernkraftwerksanlage wird das Brennelement entnommen und ein anderes zu prüfendes Brennelement in die dritte Gestellposition eingesetzt.

Durch die auf zwei Gestellpositionen verteilte Last wird eine Gestellposition weniger belastet als bei der Beaufschlagung durch das Gewicht eines Brennelementes, da die Haltevorrichtung für sich betrachtet leichter ist als ein Brennelement. Das Gestell kann daher problemlos als Aufnahme für die Haltevorrichtung verwendet werden. Das Verfahren läßt sich sowohl mit einem Lagergestell für Brennelemente als auch unmittelbar mit einem in einem Reaktorbehälter eingesetzten Traggerüst für Brennelemente nach Entfernen des Reaktorbehälterdeckels durchführen.

Eine Haltevorrichtung zur Durchführung des Verfahrens zeichnet sich dadurch aus, daß sie aus zwei Hubsäulen besteht, deren Körper in seiner Außenkontur dem Querschnitt einer Gestellposition angepaßt und an seinem unteren Ende am Boden der Gestellposition abgestützt ist, daß die nach obengerichteten Enden der Hubsäulen über eine Traverse miteinander verbunden sind, daß die Traverse eine mit der dritten Gestellposition fluchtende Durchtrittsöffnung für das Brennelement aufweist und daß das Brennelement mit der Traverse verriegelbar ist. Das Abstützen, Zentrieren und vertikale Verfahren eines Brennelementes werden damit auf einfache und zuverlässige Weise beherrscht.

Vorzugsweise ist der Körper der Hubsäule nur über einen Teilbereich seiner Umfangsfläche der Kontur einer Gestellposition angepaßt. Damit werden die Berührungspunkte zwischen dem Körper der Hubsäule und der Wandung einer Gestellposition auf das notwendige Maß beschränkt.

Um die Prüfsonde auch von einer anderen Seite in die Räume zwischen den Brennstäben einfahren zu können wird vorgesehen, daß in der Traverse eine Drehteller eingelassen ist, der in seinem Zentrum die Durchtrittsöffnung für das Brennelement aufnimmt, daß die Traverse eine mit dem Drehteller in Eingriff stehenden Antrieb trägt, daß der Drehteller in axialer Richtung auf der Traverse abgestützt und relativ zur Traverse festlegbar ist.

Gemäß einer bevorzugten Ausgestaltung trägt der Drehteller Verriegelungselemente zur Festlegung des Brennelementes.

Weiterhin ist vorgesehen, daß die Verriegelung mit einer Magnetverriegelung erfolgt, daß eine Tragstange der Magnetverriegelung mit ihrem freien Ende in eine Aussparung eines Brennelement-Pfostens eingefahren ist und mit seinem Hubmagneten der Magnetverriegelung zugewandten Teilbereich gegenüber einem Vorsprung des Drehtellers abgestützt ist. Dadurch ist ein unbeabsichtigtes Lösen der Verriegelung ausgeschlossen, weil die Rückziehkraft des Hubmagneten wesentlich kleiner ist als die Querkraft durch das Brennelement.

Vorzugsweise ist der am Boden der Gestellposition angeordnete Teil der Hubsäule wie ein Brennelement ausgebildet. Der Boden einer Gestellposition wird damit durch die Hubsäule an den Gleichen Stellen belastet wie beim Einsatz eines Brennelementes in eine Gestellposition.

Gemäß einer Weiteren Ausgestaltung ist dem Körper der Hubsäule ein Träger zur Aufnahme eines Manipulators zugeordnet. Da die Hubsäulen auch die Tragelemente für das Brennelement darstellen, läßt sich mit dieser Ausgestaltung die Positionsgenauigkeit zwischen einem Brennelement und der Prüfsonde verbessern.

Vorzugsweise ist das freie Ende des Trägers gegenüber einem weiteren Festpunkt abgestützt. Durch den Einsatz eines weiteren Festpunktes kann der Träger in einer leichteren Bauweise ausgeführt werden.

Eine andere Ausgestaltung sieht vor, daß die Haltevorrichtung zu mehreren in einer Reihe angeordnet ist und daß der jeweils letzten Hubsäule einer Reihe ein Träger zugeordnet ist. Mit dieser Ausgestaltung wird der Zeitaufwand für das Prüfen aller Brennelemente einer Kernladung wesentlich vermindert.

In verschiedenen Ausführungsbeispielen wird anhand der Figuren 1 bis 5 das erfindungsgemäße Verfahren und eine Haltevorrichtung zur Durchführung des Verfahrens beschrieben.

Dabei zeigt die

Fig. 1 den Teilbereich eines Brennelement-Lagerbeckens mit einer Haltevorrichtung und einem Brennelement,

Fig. 2 eine Aufsicht der Fig.1,

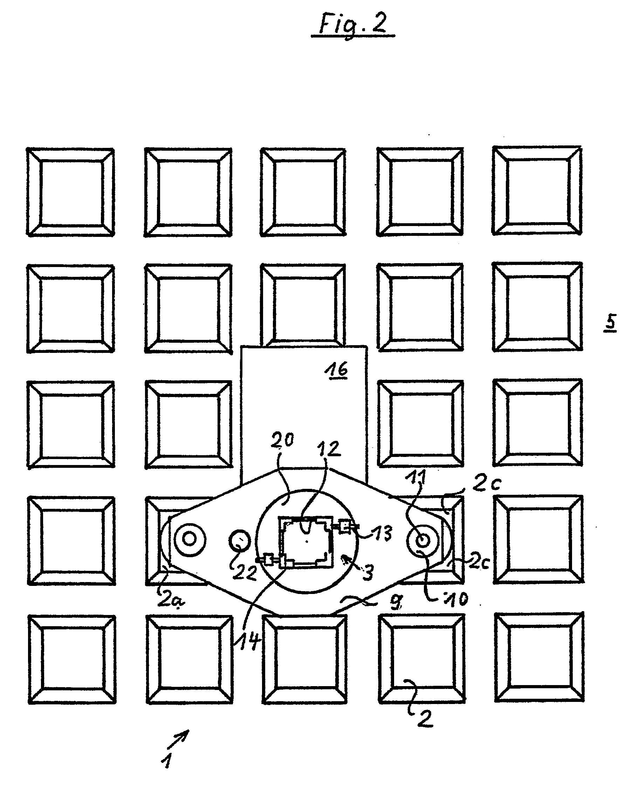

Fig. 2 eine andere Ausbildung der Haltevorrichtung

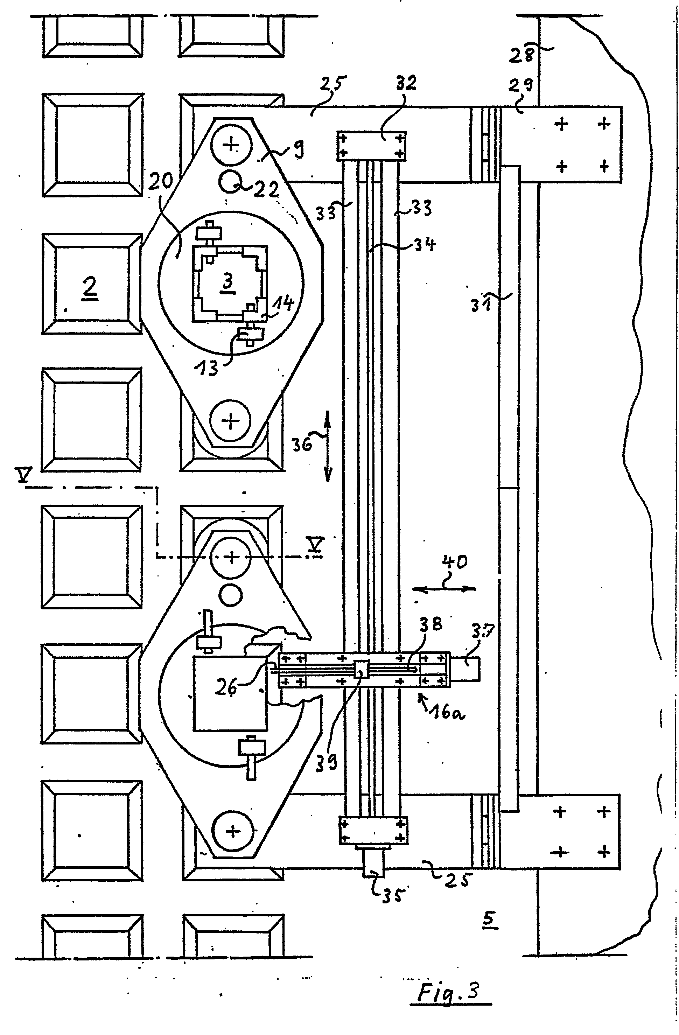

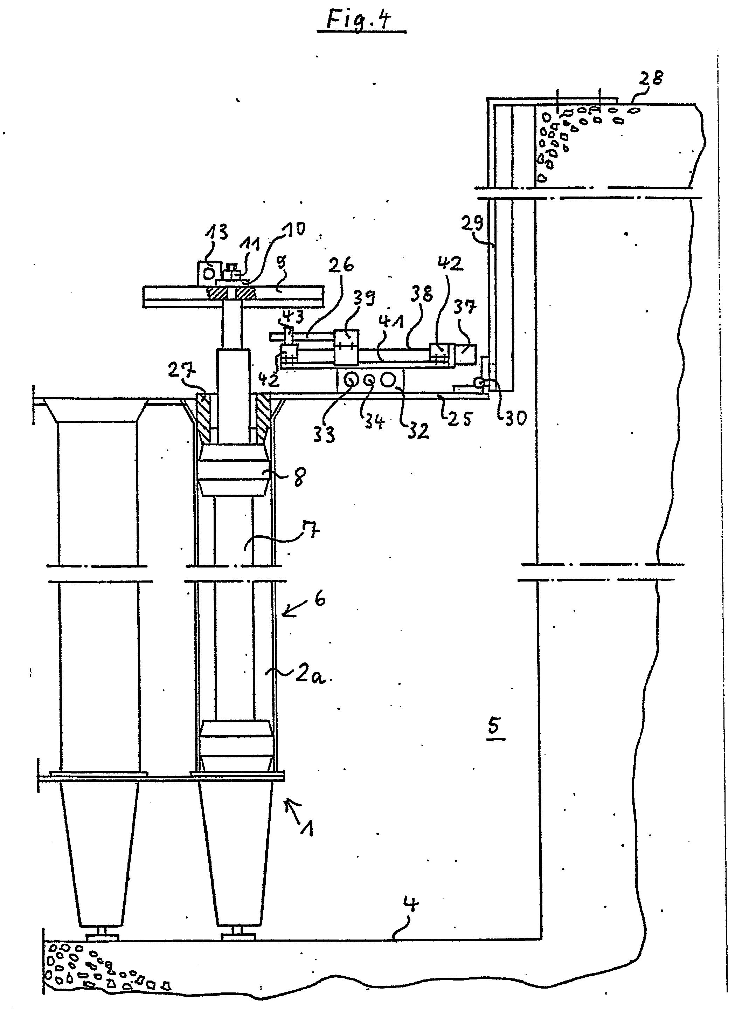

Fig. 4 einen Schnitt entlang der Linie V-V der Fig. 3 und

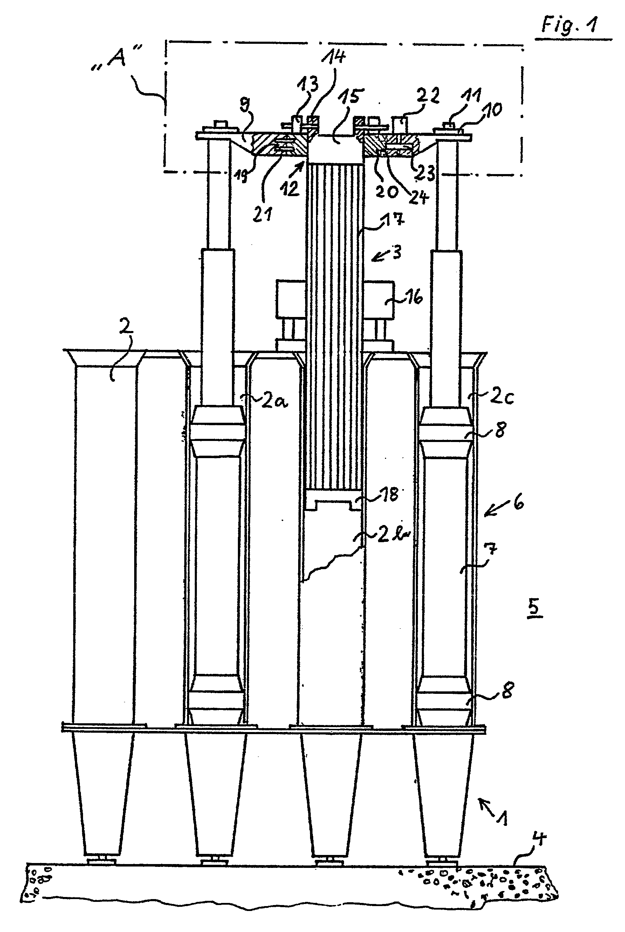

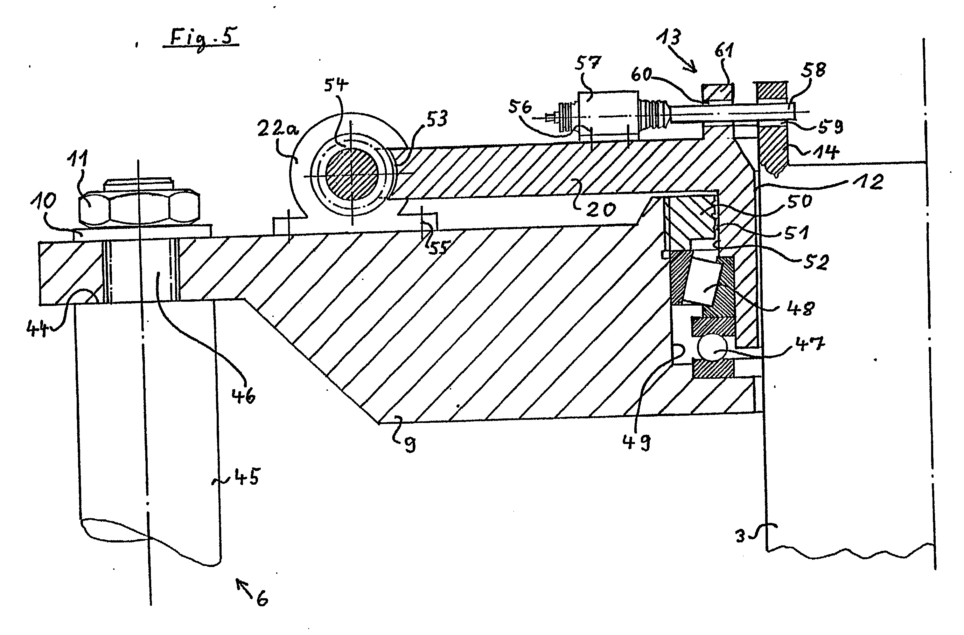

Fig. 5 einen in einem größeren Maßstab dargestellten Bereich "A" der Fig. 1 in einer anderen Ausgestaltung.

Aus den Figuren 1 und 2 ist ein Gestell 1 mit einer Vielzahl von Gestellpositionen 2 zur Aufnahme von vertikal erstreckten Brennelementen 3 wassergekühlter Kernreaktoren zu ersehen. Das Gestell ist am Boden 4 eines wassergefüllten Beckens 5 abgestellt. Drei in einer Reihe liegende Gestellpositionen 2a, 2b, 2c werden zur Durchführung des Verfahrens als Leerpositionen freigehalten. Je eine vorteilhaft als Teleskophydraulik ausgebildete Hubsäule 6 wird in den Gestellpositionen 2a und 2c, unter Freilassung der Gestellposition 2b, eingesetzt. Der Körper 7 einer Hubsäule 6 ist an seinen Endbereichen mit Führungsstücken 8 versehen, die in ihrem Querschnitt dem Querschnitt einer Gestellposition derart angepaßt sind, daß sie zur Führung und Zentrierung der Hubsäule dienen. Der den Boden einer Gestellposition kontaktende Teil der Hubsäule ist wie der Fuß eines Brennelementes ausgebildet, um das Gestell 1 nur an den Punkten zu belasten, an denen auch ein Brennelement 3 angreifen würde. Die freien Enden des oberen Schiebeteiles der als Teleskophydraulik ausgebildeten Hubsäulen 6 werden über die Traverse 9 miteinander verbunden und unter Zwischenlage einer Scheibe 10 durch eine Mutter 11 gesichert. Im Zentrum der Traverse ist eine dem Querschnitt eines Brennelementes 3 angepaßte Durchtrittsöffnung 12 vorgesehen, die eine Durchführung eines Brennelementes 3 erlaubt. Vor Beginn des Prüfvorganges wird die Teleskophydraulik so weit eingefahren, bis die Traverse 9 auf der Oberseite des Gestelles 1 zur Auflage kommt. Ein zu prüfendes Brennelement 3 wird mit einem nicht dargestellten Hebezeug der Kernkraftwerksanlage durch die Durchtrittsöffnung 12 der Traverse 9 in die zwischen den als Teleskophydraulik ausgebildeten Hubsäu len 6 befindliche unbesetzte Gestellposition 2b eingesetzt. Das Hebezeug wird abgezogen und kann an anderer Stelle der Kernkraftwerksanlage eingesetzt werden. Nunmehr wird eine auf der Oberseite der Traverse angeordnete Magnetverriegelung 13 mit wenigstens zwei Pfosten 14 des Brennelementkopfstückes 15 in Eingriff gebracht. Das Brennelement 3 wird nun mit Hilfe der Hubsäulen angehoben, auf verschiedenen Ebenen angehalten und mit dem auf dem Gestell 1 arretierten Manipulator 16, der die Prüfsonde trägt, geprüft. Das Prüfen erfolgt durch Einfahren der Sonde in die Räume zwischen den einzelnen Brennstäben 17. Soll das Brennelement 3 zusätzlich noch von einer anderen Seite aus geprüft werden, so wird die Teleskophydraulik soweit ausgefahren, bis der Brennelementfuß 18 oberhalb der Oberkante des Gestells 1 angeordnet ist. Nach dem Aufheben einer Axialsicherung 19 läßt sich ein in der Traverse 9 integrierter Drehteller 20 zusammen mit dem Brennelement 3 verdrehen. Die Axialsicherung 19 besteht aus zwei in Reihe angeordneten in der Traverse befestigten Pneumatikzylindern 21, derart Kolben in entsprechende Aussparungen des Drehtellers 20 einfahrbar sind. Zur Ausführung der Drehbewegung des Drehtellers 20 dient ein auf der Traverse 9 angeordneter Antrieb 22, der mit dem verzahnten Umfang des Drehtellers 20 über ein Zahnrad 23 in Eingriff steht. Der Drehteller 20 ist in der Traverse 9 auf einem Vorsprung 24 abstützend gelagert. Bei der Ausbildung mit Drehteller ist im Zentrum desselben die Durchtrittsöffnung 12 für ein Brennelement 3 angebracht. Der Drehteller trägt dann auch die Magnetverriegelung 13. Nach abgeschlossener Prüfung wird die Teleskophydraulik der Hubsäule 6 mit dem Brennelement abgesenkt, bis das selbe am Boden der Gestellposition aufsitzt. Die Magnetverriegelung 13 wird aufgehoben, das Brennelement 3 mit einem nicht dargestellten Hebezeug der Kernkraftwerksanlage entnommen und das nächste zu prüfende Brennelement kann eingesetzt werden.

Nach der in den Figuren 3 und 4 dargestellten Ausbildung sind zwei Haltevorrichtungen in Reihe angeordnet, so daß dadurch sechs Gestellpositionen 2 belegt sind. An den in der Reihe außen angeordneten Hubsäulen 6 sind Träger 25 zur Aufnahme eines Manipulators 16a befestigt, der seinerseits die Prüfsonde 26 trägt. Zur Befestigung eines Trägers ist dem nach oben gerichteten Führungsstück 8 dieser Hubsäule ein Distanzstück 27 zugeordnet, an dessen oberem Ende der Träger 25 abgestützt ist. Zur gegebenenfalls erforderlichen Stabilisierung der Träger 25 dient eine am Beckenrand 28 befestigte Konsole 29, die über ein Scharnier 30 mit dem Träger 25 verbunden ist. Eine Strebe 31 dient der Versteifung der Konsole. Das Scharnier erleichtert den Ein- bzw. Ausbau sowie die Handhabung des Trägers 25. Auf den Träger 25 sind über die Halterungen 32 zwei Führungsstangen 33 und eine Spindel 34 befestigt. Mit Hilfe eines Antriebsmotors 35 wird die Spindel 34 in Drehung versetzt und bewegt den Manipulator 16a in Pfeilrichtung 36. Über einen am Manipulator 16a befestigten Antriebsmotor 37 läßt sich ebenfalls mittels einer Spindel 38 in Zusammenhang mit einer Führungsstange 41 der Sondenträger 39 zusammen mit der Sonde 26 in Pfeilrichtung 40 bewegen. Eine Halterung 42 zur Lagerung von Spindel 38 und Führungsstange 41 ist mit einer Führungseinrichtung 43 ausgestattet, die die Sonde 26 während ihrer Fahrbewegung in die Räume zwischen den Brennstäben unterstützend führt. Das Anordnen von zwei Haltevorrichtungen in Reihe erlaubt während dem Prüfvorgang eines Brennelementes die Ent- bzw. Beladung der anderen Haltevorrichtung mit einem Brennelement, was insgesamt zu einer Beschleunigung des Prüfvorganges führt.

Eine andere Ausgestaltung der Traverse 9 hinsichtlich der Brennelement-Aufnahme ist aus der Fig. 5 zu ersehen, die den Bereich"A" der Fig. 1 in einem größeren Maßstab zeigt. Die Traverse 9 ruht auf einer Schulter 44 des Freien Endes einer Hubstange 45 der Hubsäule 6. Ein das freie Ende der Hubstange bildender Gewindebolzen 36 durchsetzt die Traverse 9, so daß eine Festlegung der Traverse mittels der Mutter 11 unter Zwischenlage der Scheibe 10 erfolgen kann. Der Drehteller 20 ist unter Zwischenschaltung eines Axialkugellagers 47 und eines Schrägkugellagers 48 auf den Vorsprung 24 der Traverse 9 abgestützt. Neben seiner Abstützfunktion in vertikaler Richtung dient das Schrägkugellager 48 noch der radialen Führung des Drehtellers gegenüber einer Bohrungswandung 49 der Traverse 9. An ihren nach oben gerichteten Bereich ist die Bohrungswandung 49 mit einem Gewinde versehen. Das Gewinde dient zur Aufnahme eines Gewinderinges 50, der als einstellbarer Anschlag für das Schrägkugellager 48 Verwendung findet. An seiner Innenumfangsfläche ist der Gewindering 50 mit Dichtungselementen 51 versehen, die gegenüber einer Bundfläche 52 des Drehtellers 20 zur Anlage kommen. Der parallel zur Traversenoberfläche verlaufende Drehtellerbereich ist am Außenumfang mit einer Schneckenradverzahnung 53 versehen, in die eine Schnecke 54 eines Antriebes 22a eingreift. Der Antrieb 22a ist über Schrauben 55 an der Traverse 9 befestigt und gestattet eine Drehbewegung des Brennelementes relativ zur Traverse, wenn die Hubsäulen 6 mit dem Brennelement 3 so weit ausgefahren sind, daß der Brennelementfuß 18 (Fig. 1) oberhalb der Oberkante des Gestells 2 angeordnet ist. Ein mittels Schrauben 56 am Drehteller 20 befestigter Hubmagnet 57 stellt zusammen mit seiner Tragstange 58 die in einer Aussparung 59 eines Brennelement-Pfostens 14 einfahrbar ist, die Magnetverriegelung 13 dar. Ähnlich wie die Aussparung 59 des Pfostens 14 ist eine Durchführung 60 gebildet, die in einem Vorsprung 61 des Drehtellers 20 eingebracht ist.

Ist das Brennelement in der Gestellposition 2b abgesetzt, erlaubt ein Spiel von einigen Zehnteln Millimetern zwischen der Tragstange 58 und der Aussparung 59 bzw. der Durchführung 60 ein leichtes Bewegen der Tragstange relativ zur Aussparung 59 bzw. zur Durchführung 60. Erfolgt bei in die Aussparung 59 eingefahrene Tragstange 58 der Anhebevorgang des Brennelementes mit Hilfe der Hubsäulen, so wird nach Überbrückung des vorgenannten Spieles zwischen Tragstange 58 und Aussparung 59 bzw. Durchführung 60 das Brennelement allein von den Tragstangen getragen, die sich am Vorsprung 61 des Drehtellers 20 abstützen. Eine Belastung des Hubmagneten 57 und der Schrauben 56 wird dadurch vermieden. Durch eine im Rahmen des Spieles zwischen Tragstange 58 und Ausführung 59 ausgelegte federnde Befestigung des Hubmagneten 57 an dem Drehteller 20 wird diese vorteilhafte Wirkung unterstützt. Unbeabsichtigtes Lösen der Magnetverriegelung während eines Hebevorganges ist ausgeschlossen, da die Rückziehkraft des Hubmagneten wesentlich kleiner ist als die Querkraft durch das Brennelement.

**Patentansprüche**

1. Verfahren zum Prüfen von vertikal erstreckten Brennstäben wassergekühlter Kernreaktoren, die zu einem Brennstabbündel zusammengefaßt sind, wobei eine die Prüfgeräte tragende Sonde in die Räume zwischen den Brennstäben eingefahren wird und wobei das als Brennelement bezeichnete Brennelementbündel von einem Hebezeug gehalten wird, gekennzeichnet durch die Kombination der nachfolgend aufgeführten Schritte:

a) Eine Haltevorrichtung für ein Brennelement (3) wird in zwei unbesetzte Gestellpositionen (2a, 2c) eines Gestells (1) zur Aufnahme von Brennelementen eingesetzt, wobei zwischen den zwei unbesetzten Gestellpositionen eine dritte Gestellposition (2b) freigehalten wird.

b) Ein zu prüfendes Brennelement (3) wird mit einem Hebezeug in die dritte Gestellposition 2b eingesetzt und mit der Haltevorrichtung verriegelt.

c) Das Brennelement (3) wird mit Hilfe der Haltevorrichtung in vertikaler Richtung nach oben gefahren, wobei die vertikale Fahrbewegung zum Einfahren der Prüfsonde (26) in die Räume zwischen den Brennstäben (17) unterbrochen wird.

d) Nach erfolgter Prüfung wird das Brennelement (3) mittels der Haltevorrichtung vertikal nach unten verfahren, bis es in der dritten Gestellposition (2b) abgestellt ist.

e) Mit dem Hebezeug der Kernkraftwerksanlage wird das Brennelement (3) entnommen und ein anderes zu prüfendes Brennelement in die dritte Gestellposition (2b) eingesetzt.

2. Haltevorrichtung zur Durchführung des Verfahrens nach Anspruch 1, dadurch gekennzeichnet, daß die Haltevorrichtung aus zwei Hubsäulen (6) besteht, deren Körper (7) in seiner Außenkontur dem Querschnitt einer Gestellposition (2) angepaßt ist und an seinem unteren Ende am Boden der Gestellposition (2a, 2c) abgestützt ist, daß die nach oben gerichteten Enden der Hubsäulen (6) über eine Traverse (9) miteinander verbunden sind, daß die Traverse eine mit der dritten Gestellposition (2b) fluchtende Durchtrittsöffnunge (12) für das Brennelement (3) aufweist und daß das Brennelement mit der Traverse (9) verriegelbar ist.

3. Haltevorrichtung nach Anspruch 2, dadurch gekennzeichnet, daß der Körper (7) der Hubsäule (6) nur über einen Teilbereich seiner Umfangsfläche der Kontur einer Gestellposition (2) angepaßt ist.

4. Haltevorrichtung nach Anspruch 2 oder 3, dadurch gekennzeichnet, daß in der Traverse (9) ein Drehteller (20) eingelassen ist, der in seinem Zentrum die Durchtrittsöffnung (12) für das Brennelement (3) aufnimmt, daß die Traverse (9) einen mit dem Drehteller (20) in Eingriff stehenden Antrieb (22) trägt, daß der Drehteller (20) in axialer Richtung auf der Traverse (9) abgestützt und relativ zur Traverse festlegbar ist.

5. Haltevorrichtung nach Anspruch 2, 3 oder 4, dadurch gekennzeichnet, daß der Drehteller (20) Verriegelungselemente zur Festlegung des Brennelementes (3) trägt.

6. Haltevorrichtung nach Anspruch 2 oder 5, dadurch gekennzeichnet, daß die Verriegelung mit der Traverse (9) bzw. dem Drehteller (20) mit einer Magnetverriegelung (13) erfolgt, daß eine Tragstange (58) der Magnetverriegelung mit ihrem freien Ende in eine Aussparung (59) eines Brennelement-Pfostens (14) eingefahren ist und mit seinem einem Hubmagneten (57) der Magnetverriegelung (13) zugewandten Teilbereich gegenüber einem Vorsprung (61) des Drehtellers (20) abgestützt ist.

7. Haltevorrichtung nach einem der Ansprüche 2 bis 6, dadurch gekennzeichnet, daß der am Boden der Gestellposition (2) angeordnete Teil der Hubsäule (6) wie ein Brennelementfuß (18) ausgebildet ist.

8. Haltevorrichtung nach einem der Ansprüche 2 bis 7, dadurch gekennzeichnet, daß dem Körper (7) der Hubsäule (6) ein Träger (25) zur Abstützung eines Manipulators (16a) zugeordnet ist.

9. Haltevorrichtung nach Anspruch 8, dadurch gekennzeichnet, daß das freie Ende des Trägers (25) gegenüber einem weiteren Festpunkt abgestützt ist.

10. 7. Haltevorrichtung nach einem der Ansprüche 2 bis 9, dadurch gekennzeichnet, daß sie zu mehreren in einer Reihe angeordnet ist und daß die jeweils letzten Hubsäulen (6) einer Reihe den Träger (25) aufnehmen.

## Claims

1. Method of inspecting vertically extended fuel rods of water-cooled nuclear reactors, which are combined to form a fuel rod cluster, a probe bearing the inspection instruments being entered into the spaces between the fuel rods and the fuel rod cluster, referred to as a fuel assembly, being held by a hoist, characberized by the combination of steps listed below:

a) A holding device for a fuel assembly (3) is inserted into two unoccupied rack locations (2a, 2c) of a rack (1) for accommodating fuel assemblies, a third rack location (2b) being kept free between the two unoccupied rack locations.

b) A fuel assembly (3) to be inspected is inserted with a hoist into the third rack location 2b and is locked with the holding device.

c) The fuel assembly (3) is moved upwards in vertical direction with the aid of the holding device, the vertical travelling movement being interrupted for the entering of the inspection probe (26) into the spaces between the fuel rods (17).

d) Once inspection has been carried out, the fuel assembly (3) is moved vertically downwards by means of the holding device, until it has been set down in the third rack location (2b).

e) With the hoist of the nuclear power plant, the fuel assembly (3) is removed and another fuel assembly to be inspected is inserted into the third rack location (2b).

2. Holding device for implementation of the method according to Claim 1, characterized in that the holding device consists of two lifting columns (6), the body (7) of which is adapted in its outer contour to the cross-section of a rack location (2) and is supported at its lower end on the bottom of the rack location (2a, 2c) in that the upwardly directed ends of the lifting columns (6) are interconnected via a crossbeam (9), in that the crossbeam has a through-opening (12), aligned with the third rack location (2b), for the fuel assembly (3) and in that the fuel assembly can be locked to the crossbeam (9).

3. Holding device according to Claim 2, characterized in that the body (7) of the lifting column (6) is adapted only over a portion of its circumferential surface to the contour of a rack location (2).

4. Holding device according to Claim 2 or 3, characterized in that a turntable (20) is recessed into the crossbeam (9) and accommodates in its centre the through-opening (12) for the fuel assembly (3), in that the crossbeam (9) beares a drive (22), in engagement with the turntable (20), in that the turntable (20) is supported in axial direction on the crossbeam (9) and can be fixed relative to the crossbeam.

5. Holding device according to Claim 2, 3 or 4, characterized in that the turntable (20) bears locking elements for the fixing of the fuel assembly (3).

6. Holding device according to Claim 2 or 5, characterized in that the locking to the crossbeam (9) or the turntable (20) takes place with a magnetic lock (13), in that a supporting rod (58) of the magnetic lock is entered with its free end into a recess (59) of a fuel assembly post (14) and, with its portion facing a lifting magnet (57) of the magnetic lock (13), is supported with respect to a projection (61) of the turntable (20).

7. Holding device according to one of Claims 2 to 6, characterized in that the part of the lifting column (6) arranged on the bottom of the rack location (2) is designed like a fuel assembly bottom end piece (18).

8. Holding device according to one of Claims 2 to 7, characterized in that the body (7) of the lifting column (6) is assigned a bearer (25) for the supporting of a manipulator (16a).

9. Holding device according to Claim 8, characterized in that free end of the bearer (25) is supported with respect to a further fixed point.

10. Holding device according to one of Claims 2 to 9, characterized in that it is arranged in plurality in a row and in that the last lifting columns of a row in each case accommodate the bearer (25).

## Revendications

1. Procédé pour le contrôle de barres de combustible verticales de réacteurs nucléaires à refroidissement à l'eau, qui sont réunies en un assemblage de barres de combustible, une sonde portant les appareils de contrôle étant introduite dans les espaces entre les barres de combustible et l'assemblage de barres de combustible désigné comme élément de combustible étant maintenu par un engin de levage, caractérisé en ce qu'il comprend la combinaison des étapes énumérées ci-après:

a) Un dispositif de maintien pour un élément de combustible (3) est inséré dans deux emplacements (2a, 2c) non occupés d'un châssis (1) pour la réception d'éléments de combustible, un troisième emplacement (2b) du châssis restant libre entre les deux emplacements non occupés du châssis.

b) Un élément de combustible (3) à contrôler est inséré avec un engin de levage dans le troisième emplacement (2b) du châssis et verrouillé au dispositif de maintien.

c) L'élément de combustible (3) est déplacé verticalement vers le haut à l'aide du dispositif de maintien, le mouvement vertical étant interrompu pour l'introduction de la sonde de contrôle (26) dans les espaces entre les barres de combustible (17).

d) Après le contrôle, l'élément de combustible (3) est déplacé verticalement vers le bas au moyen du dispositif de maintien, jusqu'à ce qu'il soit déposé dans le troisième emplacement (2b) du châssis.

e) L'élément de combustible (3) est retiré avec l'engin de levage de l'installation nucléaire et un autre élément de combustible, devant être contrôlé, est inséré dans le troisième emplacement (2b) du châssis.

2. Dispositif de maintien pour la mise en œuvre du procédé selon la revendication 1, caractérisé en ce que le dispositif de maintien se compose de deux colonnes de levage (6) dont le corps (7) possède des contours adaptés à la section d'un emplacement (2) du châssis et est en appui par son extrémité inférieure sur le fond de l'emplacement (2a, 2c) du châssis, que les extrémités, orientées vers le haut, des colonnes de levage (6) sont reliées par une traverse (9), que la traverse possède une ouverture de passage (12), alignée avec le troisième emplacement (2b) du châssis, pour l'élément de combustible (3), et que l'élément de combustible peut être verrouillé à la traverse (9).

3. Dispositif de maintien selon la revendication 2, caractérisé en ce que le corps (7) de la colonne de levage (6) n'est adapté aux contours d'un emplacement (2) du châssis que dans une zone partielle de sa surface circonférentielle.

4. Dispositif de maintien selon la revendication 2 ou 3, caractérisé en ce que dans la traverse (9) est encastré un plateau tournant (20) qui reçoit dans son centre l'ouverture de passage (12) pour l'élément de combustible (3), que la traverse (9) porte un système d'entraînement (22) en contact avec le plateau tournant (20), et que le plateau tournant (20) est en appui dans le sens axial sur la traverse (9) et peut être fixé par rapport à celle-ci.

5. Dispositif de maintien selon l'une quelconque des revendications 2, 3 ou 4, caractérisé en ce que le plateau tournant (20) est muni d'éléments de verrouillage pour la fixation de l'élément de combustible (3).

6. Dispositif de maintien selon la revendication 2 ou 5, caractérisé en ce que le verrouillage avec la traverse (9) ou le plateau tournant (20) se fait par un verrouillage magnétique (13), qu'une barre de support (58) du verrouillage magnétique est introduite avec son extrémité libre dans un évidement (59) d'un montant (14) d'élément de combustible et est en appui avec sa partie, tournée vers un aimant de levage (57) du verrouillage magnétique (13), sur une saillie (61) du plateau tournant (20).

7. Dispositif de maintien selon l'une quelconque des revendications 2 à 6, caractérisé en ce que la partie, disposée au fond de l'emplacement (2) du châssis, de la colonne de levage (6) est réalisée comme socle (18) d'élément de combustible.

8. Dispositif de maintien selon l'une quelconque des revendications 2 à 7, caractérisé en ce qu'au corps (7) de la colonne de levage (6) est associé un support (25) pour l'appui d'un manipulateur (16a).

9. Dispositif de maintien selon la revendication 8, caractérisé en ce que l'extrémité libre du support (25) est en appui en un autre point fixe.

10. Dispositif de maintien selon l'une quelconque des revendications 2 à 9, caractérisé en ce que plusieurs de ces dispositifs sont agencés en une rangée et que les dernières colonnes de levage (6) d'une rangée reçoivent le support (25).

*Fig. 1*

Fig. 2

*Fig.3*

## Fig.4

_Fig.5_